# EUROPEAN PATENT APPLICATION

(11) **EP 4 108 640 A1**
(43) Date of publication of application: **28.12.2022**
(21) Application number: 22180025.3
(22) Date of filing: 21.06.2022
(51) Int. Cl.: C02F 3/08, C02F 3/30, C02F 3/00, C05D 3/02, C02F 103/20, C02F 3/10

(54) **A METHOD TO TREAT LIQUID MANURE**

(30) Priority: 22.06.2021 NL 2028515
(71) Applicant: IM-aces BV, 5801 EG Venray (NL)
(72) Inventor: LUIJKX, Ronald Adrianus Johannes, 5809 EN Leunen (NL)
(74) Representative: Janssen, Paulus J. P.

(57) **Abstract**

The invention pertains to a method to treat liquid manure in order to convert it into a fertiliser composition, the method comprising subjecting the liquid manure to nitrifying bacteria to convert ammonium into nitrate in the presence of denitrifying bacteria, while at the same time suppressing denitrification by adding calcium oxide or calcium hydroxide to the liquid manure to maintain the pH between 6.5 and 7.5, and by passing oxygen containing gas through the liquid manure to maintain the oxygen concentration in the liquid manure above 1 mg/l.

## Description

### FIELD OF THE INVENTION

The invention in general pertains to methods to treat liquid manure such that the resulting material can be used in a manner that is more economic and environmentally friendly than spreading the liquid manure directly over agricultural land. The latter becomes more and more expensive due to restrictions in the emission of nitrogen, in particular in the form of ammonia.

### BACKGROUND OF THE INVENTION

The present invention relates to the disposal of excreta (excrement), made up of faeces and/or urine, of production animals kept in a confined space such as a stall. In particular, the invention relates to such disposal of excreta from porcine and bovine animals.

In wide use in practice, and therefore generally known, are stalls whose floor surface is constructed so as to be entirely or partially permeable by perforation to animal excreta, for example as a slatted floor, a liquid manure channel for the collection and common drainage of faeces and urine (mixed together as a slurry) being provided under the permeable floor. Typically, the liquid manure channel has a relatively large capacity, because it is used not only to collect but also to store faeces and urine. From time to time the liquid manure channel is emptied, whereby the liquid manure is then pumped either into a liquid manure container outside the stall or into a transport vehicle so that it can be applied on a field surface. Significant environmental pollution, mainly due to the formation and diffusion of ammonia (but also of methane gas, hydrogen sulfide and N₂O), disadvantageously arises both in the stall during the collection and storing of the liquid manure and also in the surroundings of the liquid manure container, or in the surroundings of a field surface dunged with liquid manure. This may also have an adverse effect on the health of the animals kept in the stall and the human operators working in the stall. In particular, unpleasant odors arise that are felt by most of those affected to be strongly disturbing. In order to avoid damage to the animals kept in the stall, an intensive exchange of air is required, which takes place using ventilators, for which a considerable amount of electrical energy must be used. However, this intensive air exchange again results in an increased discharge of harmful gas outside the stall.

Multiple solutions to the above problems have been proposed in the art.

A first group of solutions aims at preventing that urine and faeces get mixed in order to avoid that ammonia is produced. Such a solution has for example been proposed in US 6,698,383. This document discloses a V shaped gutter having two in essence flat guiding tracks arranged in a V, to guide both faeces and urine. The angle of the guiding tracks of the gutter surfaces with the horizontal is optimized to be 8° such that urine and faeces are separated automatically. The urine flows under the influence of gravity towards the center of the V-shaped gutter, while the faeces remain on the surface of the guiding tracks such that the faeces and urine are separated before the beginning of natural decomposition. The faeces and urine from the stall are optionally stored and further treated separately from one another, whereby the steps to removing the faeces and urine from the stall and the storing or the further treatment thereof takes place in a fresh state, before the beginning of a decomposition, and whereby the step of further treatment of the faeces comprises a surface enlargement and drying of the faeces.

Another type of solution is to treat the manure by pressing, sedimentation, centrifugation, screen separation etc. in order to create a solid manure fraction and a liquid manure fraction, whereafter the liquid manure fraction is further treated in order to convert the nitrogen present in ammonium or ammonia into gaseous nitrogen. This way, the liquid fraction is treated to become wastewater that can be discharged freely on any surface, in particular a watery surface such as a brook, river or lake.

Other solutions are for example to try and prevent that the urease as present in the faces convert the urea into ammonium. Apart from the fact that it is expensive to add urease blockers, this is only a temporarily solution: as soon as the manure is discharged on the land, the process of conversion of the urea into ammonium and hence into ammonia gas will commence again.

### OBJECT OF THE INVENTION

It is an object of the invention to provide an improved method to treat liquid manure, in particular a method that leads to the provision material that has added value when compared to the liquid manure or prior art end products such as wastewater.

### SUMMARY OF THE INVENTION

In order to meet the object of the invention, a method to treat liquid manure has been devised whereby the liquid manure is converted into a fertiliser composition, however without the disadvantageous release of ammonia, at least to a far lesser extent, and while safeguarding that the fertiliser does not substantially negatively influence the pH of the soil it is used onto, which method comprises subjecting the liquid manure to nitrifying bacteria (which may be a mixture of different bacteria) to convert ammonium (inherently present in the liquid manure) into nitrate, while at the same time adding calcium oxide or calcium hydroxide (i.p. as solids) to maintain the pH between 6.5 and 7.5, for example at pH 6.5, 6.6, 6.7, 6.8, 6.9, 7.0, 7.1, 7.2, 7.3, 7.4, 7.5 or any value in between. In particular, in the method of the invention, since denitrifying bacteria are inherently present, the denitrification process by these bacteria is suppressed by maintaining the pH between 6.5 and 7.5, and by passing oxygen containing gas through the liquid manure to maintain the oxygen concentration in the liquid manure above 1 mg/l. This way, it can be substantially prevented that the emerging nitrate is converted to nitrogen gas and therewith lost as a source for fertilisation. Substantial prevention in this sense means that less than 10% of the ammonium - on a molecular basis - will ultimately be converted to nitrogen gas, preferably less than 9, 8, 7, 6, 5, 4, 3, 2, 1, 0.5, 0.4, 0.3, 0.2, 0.1 up to even 0 %.

It was found that by this relatively simple procedure the production of ammonia can be prevented at least to a substantial part while at the same time creating a composition that has an acceptable pH to be used on soil (i.e. will not create acidification of the soil after being spread on the soil) and being a valuable fertiliser due to the presence of calcium nitrate. The function of the calcium oxide or hydroxide is however not only to provide the presence of calcium ions, but also to maintain the pH during the nitrification process between 6.5 and 7.5. Although a buffer system would be the more obvious option when desiring to maintain the pH at a constant value, it was found that, although hardly soluble, the present calcium salts can be used to obtain the same goal (for example by continuously measuring the pH and adding the alkalic calcium salt when needed to adjust the pH), whereby the further denitrification of the nitrate to nitrogen (denitrifying bacteria are present in the environment everywhere) can be substantially prevented while at the same time creating the advantageous calcium nitrate salt in the composition. This way, the resulting product can be used to replace two common soil improvement treatments namely 1) adding a nitrogen rich fertiliser and 2) adding calcium salts. Both these treatments, which are commonly performed as two separate processes when aiming at soil improvement, can be (at least substantially) replaced by using the liquid manure treated in line with the current invention, as a soil fertiliser.

As stated above, although hardly soluble, the present calcium salts when actively added as an ingredient have been shown to be very suitable to reach the object of the invention. Apparently for liquid manure, the solubility is just high enough to be able and adjust the pH on demand during a bacterial nitrification process, to keep it between the optimum pH for the nitrifying bacteria. Apparently, the pH drop induced by the nitrifying bacteria is slow enough to enable the hardly soluble calcium salt to maintain the pH. Even stronger, to the surprise of the inventors, these salts even have advantages over common buffers in that they are more robust and are capable of adjusting the pH to the required levels for a larger range in type of liquid manure (e.g. the origin, type of stables, type of animals, pre-treatment etc.). Another advantage is that when using the current calcium salts, the pH could be adjusted to be over 7.5, for example when desiring a phosphate removal after the nitrification process. For this a higher pH is necessary which would be in essence blocked when using a buffer that is meant to keep the pH in a narrow range around 7.

Also, in the method according to the invention, while subjected to nitrifying bacteria, oxygen containing gas is passed through the liquid manure. Oxygen was found to be advantageous in the current process to further suppress the action of any denitrifying bacteria (inherently) present in the liquid manure. This may lead to larger amounts of nitrate in the ultimate composition. The same principle can be applied not only during the process of nitrification, but also in the optional storage of the fertilizer afterwards. Preferably, oxygen containing gas is passed through the liquid manure to maintain the oxygen concentration in the liquid manure above 1 mg/l, such as above 2 mg/l, 3 mg/l, 4 mg/l, 5 mg/l or above. This way, the oxygen level stays well above the optimum for denitrification which is believed to be around 0.5 mg/l.

All-in-all, the present invention allows for a (simple) way to convert liquid manure into a highly valuable fertilizer.

It is noted that WO2007/097612 discloses a method for the conversion of liquid waste biomass into a fertilizer that also applies nitrifying bacteria. However, a chemical oxidation is needed to convert the nitrite into nitrate whereas in the present invention it is the step of treatment with the bacteria that lead to the conversion to nitrate. Moreover, no measure is taken to suppress denitrification. On the contrary, the pH during the chemical oxidation step is adjusted between 3 and 5 (see page 12, line 33) which favours denitrification and hence loss of valuable nitrate.

WO 93/23349 also discloses a method for processing a liquid nitrogen rich waste product into a fertilizer, but contrary to the present method, denitrification is part of the process in order to keep the nitrate level low. Hence, no measures are taken to suppress denitrification.

### DEFINITIONS

*Liquid manure* is a composition based on animal waste, in particular at least comprising urine and fractions of faeces, in particular waste of production animals such as bovine, porcine and avian species, that comprises at least 85% of water, or even 86, 87, 88, 89, 90, 91, 92, 93, 94, 95, 96, 97, 98, 99% or above (but below 100%), and therefore can be handled as a liquid, as opposed to solid manure that is stackable.

*Air* is the gaseous substance surrounding the earth, a mixture mainly of oxygen (about 21%) and nitrogen (about 78%) and amounts of argon, carbon dioxide, hydrogen, neon, helium, and other gases.

*Nitrifying bacteria* are bacteria that are able to oxidise ammonium ions to nitrite and subsequently nitrate, such as for example *Castellaniella* species, Pedobacter species, *Thermomonas, Mycetocola* species and *Nitrosomonas* species. These bacteria are also referred to as ammonia oxidizing bacteria in the art. In the environment, they inherently form a symbiosis with denitrifiying bacteria that quickly convert the nitrate to molecular nitrogen. At pH below 6.5, denitrifiers will dominate over the nitrifiers. In practice, both types of bacteria are always present in combination.

*Calcium oxide,* commonly known as quicklime or burnt lime, is a widely used inorganic compound with the chemical formula CaO. It is a white, caustic, alkaline, crystalline solid at room temperature.

*Calcium hydroxide* is an inorganic compound with the chemical formula Ca(OH)₂. It is a colorless crystal or white powder and is produced when quicklime is mixed or slaked with water. It has many names including hydrated lime, caustic lime, builders' lime, slack lime, cal, and pickling lime.

### FURTHER EMBODIMENTS OF THE INVENTION

In a further embodiment of the method according to the invention, air is passed through the liquid manure to provide for the oxygen. Air is a cheap abundant source for the oxygen needed to suppress denitrification.

In yet a further embodiment the method in addition to the subjection to nitrifying bacteria comprises a storage step, wherein the liquid manure after nitrification is stored for up to 1 year. This was found to be advantageous since fertiliser cannot be discharged onto soil the year round. In some areas this is even restricted to a period of a couple of weeks per year. This means that is advantageous when the composition that results from the current treatment of liquid manure is able to be stored for up to about 1 year. Indeed, it was found to be possible to store the treated manure without a complete loss of the valuable calcium nitrate.

In a further embodiment, during the storage of the liquid manure, oxygen containing gas, in particular air, is passed through the liquid manure to suppress any denitrification during storage. A further advantage of this is the suppression of the formation of methane, a highly unwanted greenhouse gas.

Optionally, during the storage of the liquid manure the pH of the liquid manure is kept between 6.5 and 7.5. For this, CaO and Ca(OH)₂ may be used, but this is not essential. Any compound or mixture of compounds (such as a buffer system) can be used to maintain the pH in order to suppress denitrification and keep the pH at a level making it suitable for direct deposition on land.

In still a further embodiment, for the subjection of the liquid manure to nitrifying bacteria, the manure is put in a reactor that comprises multiple separate carriers (i.e. particular matter such as grains, small cubes, rings etc.) that contain the bacteria, e.g. being provided as a coating containing the bacteria on the surface of the carriers. Carriers for bacteria (also denoted as carriers for biofilms) as such are commonly known in the art, for example from US 6,126,829 and US 7,189,323. It was found that they can also be advantageously used in the method of the current invention.

Preferably, the container is filled for more than 30% of its volume with the multiple separate carriers, preferably for more than 50%. This means that the loosely packed carriers are present in at least 30%, preferably at least 50% of the volume of the container, such as 55%, 60%, 65%, 70%, 75%, 80%, 85%, 90% or even higher percentages. This increase the efficiency of the process per volume part of the container. The net volume of the carriers, due to their typical open structure may be substantially lower. The more open the structure of a carrier is, the higher the surface to volume ration of the carrier. Preferably this ration is above 1000 m² per m³ of the carrier, such as 1250 m²/m³ or even over 1500 m²/m³, such as for example 3000 m²/m³.

In an embodiment the multiple separate carriers are suspended in the liquid manure, which means they float in the liquid manure (i.e. being suspended therein), at least when this manure is stirred or otherwise mechanically kept moving and mixed.

In again a further embodiment the temperature of the liquid manure during the subjection to the nitrifying bacteria is kept between 5°C and 40°C. Preferably the temperature of the liquid manure during the subjection to the nitrifying bacteria is kept between 15°C and 35°C, most preferably between 20 and 30°C, such as around 25°C.

In still again a further embodiment the pH of the liquid manure during the subjection to the nitrifying bacteria is maintained between 6.8 and 7.3.

The method is advantageously suitable for treating liquid manure that contains less than 8% (v/v) of unsolved particles, meaning that the total amount of suspended solids (also denoted as TSS) is below 8%. Typical examples are urine, filtered liquid manure, centrifuged manure etc. Preferably the liquid manure contains between 1% (v/v) and 6% (v/v) of unsolved particles.

The invention will be further shown in more detail in the example section here beneath.

### EXAMPLES

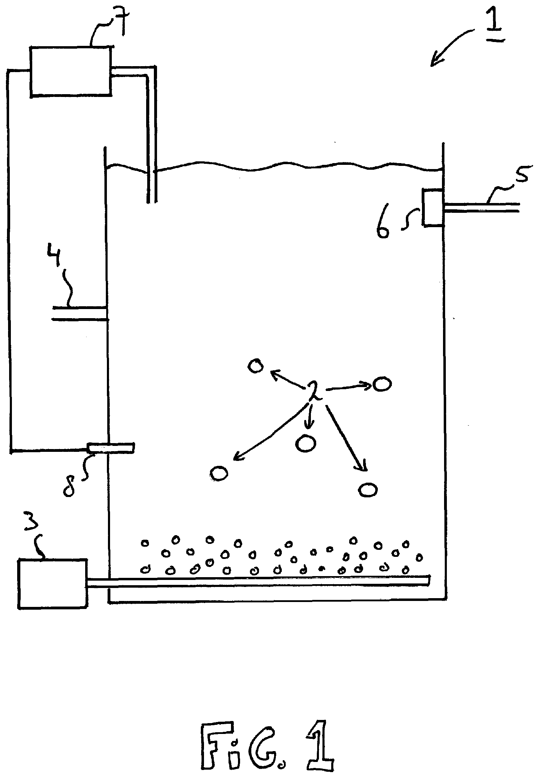

Figure 1 schematically shows a reactor (container) for treating liquid manure in line with the invention.

Example 1 describes typical process parameters for a reactor.

### Figure 1

Figure 1 schematically shows a reactor (container) for treating liquid manure in line with the invention. In this particular example the reactor is a silo-like structure 1 having a height of 6 meters and a width of 2.5 meters (a 20 ft container having a volume of about 33.5 m³). This is sufficient to treat liquid manure locally on a farm having 1-4000 pigs. The silo 1 is filled with liquid manure. Biofilm carriers 2 (see e.g. US 6126829, Kaldnes Miljoteknologi AS) are added for about 35% of its volume. The carriers are coated with a mixture of nitrifying bacteria (see e.g. the mixture as known form US 2011/0000851A1, Vanotti et al.). Near the bottom, the reactor 1 is provided with an air blower 3 to blow air bubbles through the liquid manure at a level such that the oxygen concentration in the liquid manure is at 1.5 mg/l. The reactor is also foreseen with a water influent pipe 4 and a water effluent pipe 5 (preceded by a separator 6 to prevent any carriers 2 to be lost with the water or clogging the effluent pipe). Near the top, the reactor 1 is provided with a dosing system 7 for dosing a mixture of calcium oxide and calcium hydroxide. The dosing amount and frequency is controlled by measuring the pH of the content of the reactor using pH sensor 8. In this example the temperature of the manure is not controlled. However, for some types of manure, or mixtures of bacteria, dimensions of the reactor and environmental circumstances temperature control (for example using pipes to let cooling or heating liquid transfer heat to the liquid manure) is an option to keep the temperature within a predetermined range such as 20-30°C.

Once the nitrification is (nearly) complete, the treatment is stopped and the resulting composition can be used directly as a fertiliser on agricultural land. Alternatively, the composition is stored in a storage container for up to one year (or longer). During storage, air is blown through the composition to prevent (substantial) denitrification.

### Example 1

Typical process parameters for a reactor as depicted in figure 1 are as follows: for completely converting the ammonium in liquid manure to calcium nitrate, one needs about 1 m³ of reactor space for every 10 liters of manure that is provided per hour. One pig, in a regular stable type, produces about 0.08 liters of liquid manure per hour, which means that the reactor can handle the treatment of about 4000 of these pigs. This way, if one starts with transparent liquid manure (e.g. urine, or filtered manure, in each case containing less than1% of unsolved particles), a calcium nitrate solution can be produced continuously for all manure of these 4000 pigs.

## Claims

1. A method to treat liquid manure in order to convert it into a fertiliser composition, the method comprising subjecting the liquid manure to nitrifying bacteria to convert ammonium into nitrate in the presence of denitrifying bacteria, while at the same time suppressing denitrification by adding calcium oxide or calcium hydroxide to the liquid manure to maintain the pH between 6.5 and 7.5, and by passing oxygen containing gas through the liquid manure to maintain the oxygen concentration in the liquid manure above 1 mg/l.

2. A method according to claim 1, **characterised in that** while subjected to nitrifying bacteria, air is passed through the liquid manure.

3. A method according to any of the preceding claims, **characterised in that** the method in addition to the subjection to nitrifying bacteria comprises a storage step, wherein the liquid manure after nitrification is stored for up to 1 year.

4. A method according to claim 3, **characterised in that** during the storage of the liquid manure, oxygen containing gas, in particular air, is passed through the liquid manure.

5. A method according to claim 3 or 4, **characterised in that** during the storage of the liquid manure the pH of the liquid manure is kept between 6.5 and 7.5.

6. A method according to any of the preceding claims, **characterised in that** for the subjection of the liquid manure to nitrifying bacteria, the manure is put in a reactor that comprises multiple separate carriers that contain the bacteria.

7. A method according to claim 6, **characterised in that** the reactor is filled for more than 30% of its volume with the multiple separate carriers, preferably for more than 50%.

8. A method according to claim 6 or 7, **characterised in that** the multiple separate carriers are suspended in the liquid manure.

9. A method according to any of the preceding claims, **characterised in that** the temperature of the liquid manure during the subjection to the nitrifying bacteria is kept between 5°C and 40°C.

10. A method according to any of the preceding claims, **characterised in that** the temperature of the liquid manure during the subjection to the nitrifying bacteria is kept between 20°C and 30°C.

11. A method according to any of the preceding claims, **characterised in that** the temperature of the liquid manure during the subjection to the nitrifying bacteria is kept around 25°C.

12. A method according to any of the preceding claims, **characterised in that** the pH of the liquid manure during the subjection to the nitrifying bacteria is maintained between 6.8 and 7.3.

13. A method according to any of the preceding claims, **characterised in that** the liquid manure contains less than 8% of unsolved particles.

14. A method according to any of the preceding claims, **characterised in that** the liquid manure contains between 1% and 6% of unsolved particles.
